# EUROPEAN PATENT APPLICATION

(11) **EP 1 347 363 A1**
(43) Date of publication of application: **24.09.2003**
(21) Application number: 02425180.3
(22) Date of filing: 22.03.2002
(51) Int. Cl.: G06F 3/023

(54) **A reconfigurable keyboard for a computer**

(71) Applicant: Universita' degli studi di Bologna, 40121 Bologna (IT)
(72) Inventor: Campari, Gianfranco Enrico, 40133 Bologna (IT); Odorici, Fabrizio, 40053 Bazzano (IT)
(74) Representative: Jorio, Paolo

(57) **Abstract**

A reconfigurable keyboard (1) for a computer (2) comprising a plurality of keys (3) for entering data, each one of which is provided with a display (4) comprising an array (9) of electrically activatable areas for displaying symbols indicating the data, and an activation microcircuit (10) electrically connected to the keyboard (9) for selectively activating each area; the keyboard (1) comprising a local control unit (6), designed for selectively controlling, via the microcircuit (10), display of the symbols on said array (9); the array (9) comprising a plurality of organic light-emitting diodes (OLEDs); the activation microcircuit (10) comprising a plurality of transistors electrically connected to the organic light-emitting diodes (OLEDs) for controlling activation/de-activation of the latter.

## Description

The present invention relates to a reconfigurable keyboard for a computer.

In particular, the present invention relates to a reconfigurable keyboard designed for computers, such as, for example, notebooks, servers, or personal computers, to which the present description will make explicit reference without thereby implying any loss of generality.

As is known, in recent times, there has arisen the need, on the part of computer users, to have available keyboards for entering data which are provided with a high level of versatility, i.e., keyboards designed to be reconfigured whenever required according to the needs of use of the user himself.

Very frequently, in fact, there arises the need, on the part of the user to use, for example in writing or programming, alphanumeric symbols different from the ones printed on the top face of each key of the keyboard.

For this purpose, keyboards have been developed which are designed to enable the user of a computer to reconfigure the "mapping" of the keys, i.e., to assign any alphanumeric symbol to each key of the keyboard, which indicates a datum or a function that can be communicated to the computer by pressing the keys.

In the case in point, each key of the keyboards mentioned above is provided with a display device, which is fixed to the top end of the key and has the function of displaying the alphanumeric symbol that has been assigned to the key itself during reconfiguration.

Each area of visualization of the display is activated/de-activated by the control circuit, which is designed to drive the display device according to the symbol to be displayed.

The keyboard mentioned above is moreover provided with an internal unit for managing the symbols, which is designed to handle mapping, i.e., assignment of symbols to the keys, and is able to communicate to each control circuit the symbol to be displayed on the corresponding key.

The display device mounted on the keys of the keyboard mentioned above is constituted by a display comprising an array of microLEDs (light-emitting diodes), which can be individually activated by the control circuit to obtain display of the symbol assigned to the key following upon reconfiguration.

Keyboards provided with keys having displays with microLED arrays present the major drawback of absorbing a particularly high electric power, i.e., higher than the electric power that is normally supplied by the computer to standard keyboards. Consequently, the above keyboards prove difficult to interface with computers that use commonly available communication protocols.

In addition, displays with microLED arrays, as well as offering to the user an extremely limited degree of resolution, and hence being far from satisfactory, present somewhat limited ergonomic characteristics, as well as an excessive weight, which considerably reduces the performance offered by the key in terms of typing speed.

With the aim of eliminating the problems described above, the proposal has been made to replace the microLED-array displays with liquid-crystal displays (LCDs), the latter offering ( as compared to microLED-array displays ) a higher degree of definition and a lower absorption of electric power, so enabling interfacing between the keyboard and any personal computer.

The above-mentioned keyboards present, however, the major problem of not allowing display of the symbols for the user in the event of poor visibility and of offering an angle of display that is extremely limited on account of parallax error in the presence of sufficient lighting. In the case in point, the degree of display offered by LCDs is considerably reduced when the observation point of the user is not located on an axis substantially orthogonal to the plane of lie of the display and passing through the centre of the display itself.

Finally, the use of the aforesaid LCDs determines an increase in the cost of production of the keyboard, which discourages users from buying reconfigurable keyboards.

The purpose of the present invention is to provide a reconfigurable keyboard for a computer which preserves all the advantages offered by keyboards provided with LCD keys, which is able to offer a display of the symbols in the event of poor or no visibility, and which is inexpensive to produce.

According to the present invention, there is provided a reconfigurable keyboard for a computer as described in Claim 1.

The present invention will now be described with reference to the attached drawings, which illustrate a non-limiting example of embodiment thereof, and in which:
- Figure 1 is a perspective view of a keyboard built according to the teachings of the present invention;
- Figure 2 is a block diagram of the internal electrical circuits of the keyboard illustrated in Figure 1;
- Figure 3 is a lateral cross section of a key used in the keyboard illustrated in Figure 1; and
- Figure 4 is a cross section according to the plane II of the key illustrated in Figure 3.

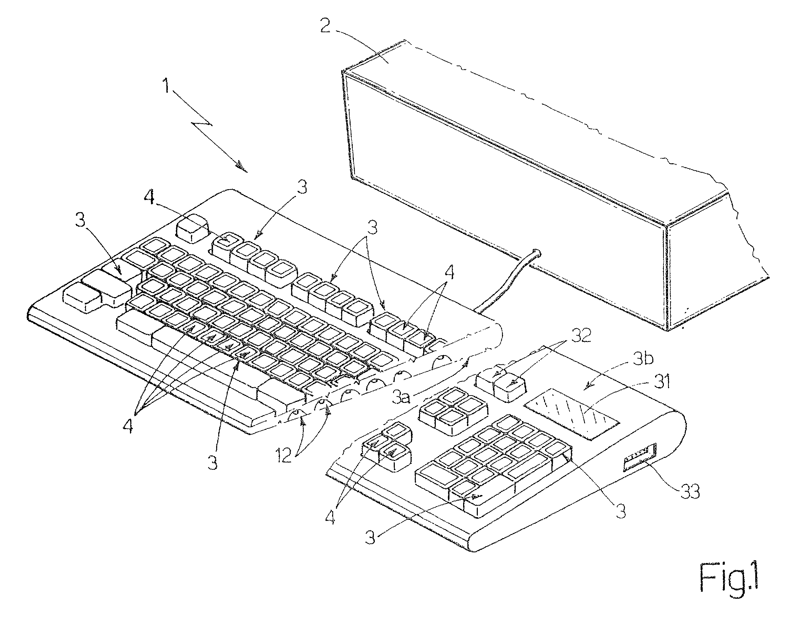

With reference to Figure 1, the reference number 1 designates, as a whole, a reconfigurable keyboard for a computer 2, the said keyboard being provided with a plurality of appropriately distributed keys and being designed to enable the user of a computer 2 to reconfigure "mapping" of the keys 3, i.e., to assign any alphanumeric symbol or any image to each key 3 of the keyboard 1, indicating a datum or a function that can be implemented on the computer 2 by pressing the keys 3.

In particular, each key 3 comprises a graphic display 4 having the function of displaying any alphanumeric symbol or any image associated to a datum that can be entered or to a function that can be implemented on the computer 2 by pressing the key 3.

In the case in point, the keyboard 1 is able to allow the user to assign to each key 3 any alphanumeric symbol or any image by means of an operation of reconfiguration of the data or functions, which can be performed directly from the keyboard 1, or else by means of processing performed by the computer 2 connected to the keyboard 1 itself.

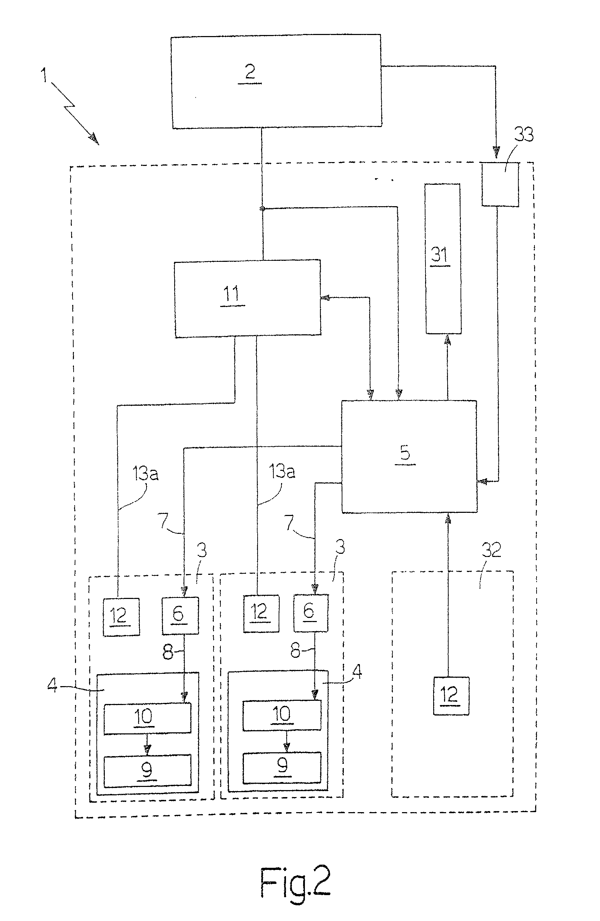

With reference to Figure 2, the keyboard 1 comprises a central configuration unit 5, designed to handle assignment of alphanumeric symbols and/or images to each key 3 according to the configuration chosen by the user, and a plurality of local control units 6, each of which is associated to a respective key 3 and is able to activate/de-activate display of the symbol or image assigned by the central configuration unit 5 to the key 3 on the graphic display 4.

In the case in point, the central configuration unit 5 is designed to communicate, through a plurality of data-communication lines 7 (described in detail in what follows), with the local control units 6 associated to the keys 3, so as to send to the latter an information signal codifying the symbol or image assigned to the respective key 3.

In particular, each local control unit 6 is connected, via a connection circuit 8 (described in detail in what follows), to the graphic display 4 integrated in the key 3 and designed to display to the user the symbol or image associated to the key 3.

With reference to Figure 2, the keyboard 1 further comprises an interface circuit 11, which is designed to effect a bi-directional communication of data between the keyboard 1 and the computer 2, and a series of switching devices 12 (described in detail in what follows), each of which has the function of detecting and transmitting to the computer 2, via the interface circuit 11, an information signal indicating the condition of closing of a respective key 3, obtained when the latter is depressed.

From the foregoing description, it should be pointed out that the interface circuit 11 can be provided by means of a communication interface of a conventional type that is able to communicate with the computer 2 via a bi-directional communication protocol of a known type, such as, for example, the protocols AT, PS-2, MF-11 or similar protocols, whilst the central configuration unit 5 can be provided by means of an integrated electronic circuit of a programmable type, which is designed to communicate in a unidirectional way with the computer 2, so as to receive from the latter the updatings regarding the mappings of the keys 3.

In particular, as illustrated in the example of Figure 2, the central configuration unit 5 can be directly connected to the communication bus which connects the computer 2 to the interface circuit 11 and hence receive from the computer 2 itself the information regarding the new mapping of the keys 3. In this case, the computer 2 will be able to address the information appropriately so as to transmit it to the interface circuit 11 or to the central configuration unit 5.

From what has been described above, it should moreover be pointed out that the central configuration unit 5 is designed preferably, but not necessarily, to effect a bi-directional communication with the interface circuit 11 so as to control, each time, the encoding and transmission, performed by the latter to the computer 2, of the data selected by the user according to the new mapping of the keyboard 1.

With reference to Figure 2, each graphic display 4 comprises an array 9 defined by a plurality of electrically activatable areas for displaying any image or any alphanumeric symbol, and an activation microcircuit 10 connected at input, through the connection circuit 8, to the respective local control unit 6, from which it receives a control signal encoding the symbol to be displayed, and connected, at output, to the array 9 of electrically activatable areas, so as to drive, according to the control signal, activation of each electrically activatable area (commonly referred to as pixel) belonging to the array 9 to obtain display of the symbol or image associated to the key 3. In the case in point, unlike the arrays 9 of electrically activatable areas comprised in the graphic displays mounted on the keys 3 of currently known keyboards, the array 9 of electrically activatable areas of each graphic display 4 comprises a plurality of organic light-emitting diodes (OLEDs), whilst the activation microcircuit 10 comprises a plurality of transistors, which are electrically connected to said OLEDs for controlling activation/de-activation thereof.

In detail, the OLEDs are made by interposing a thin layer (not illustrated) of an electroluminescent organic material between two layers (not illustrated) of metal or crystalline semiconductor that function as electrodes for the injection of charge carriers so as to obtain an extremely thin film. For further characteristics of OLEDs, explicit reference is made to the literature regarding OLED displays, such as, for instance, the international patent bearing the number WO-0182390 regarding an OLED display.

As regards the microcircuit 10, this may be obtained by means of a passive array of transistors designed to manage sequential turning-on (according to rows and columns of the OLEDs), or else by means of an active array defined by one thin layer or film (not illustrated) of transistors (not illustrated) and commonly referred to as thin-film transistors (TFTs).
In particular, the active array of TFTs is integrated with the film of OLEDs, in such a way that one or more transistors forming the film of the microcircuit 10 are electrically connected to a respective OLED so as to control activation/de-activation of the area of the array 9.

The transistors (not illustrated) of each microcircuit 10 are connected at input, via the connection circuit 8, to the local control unit 6, from which they receive enabling to activate/de-activate a given area of the array 9 of the display 4, whilst, at output, they are connected to a respective area of the array 9 itself.

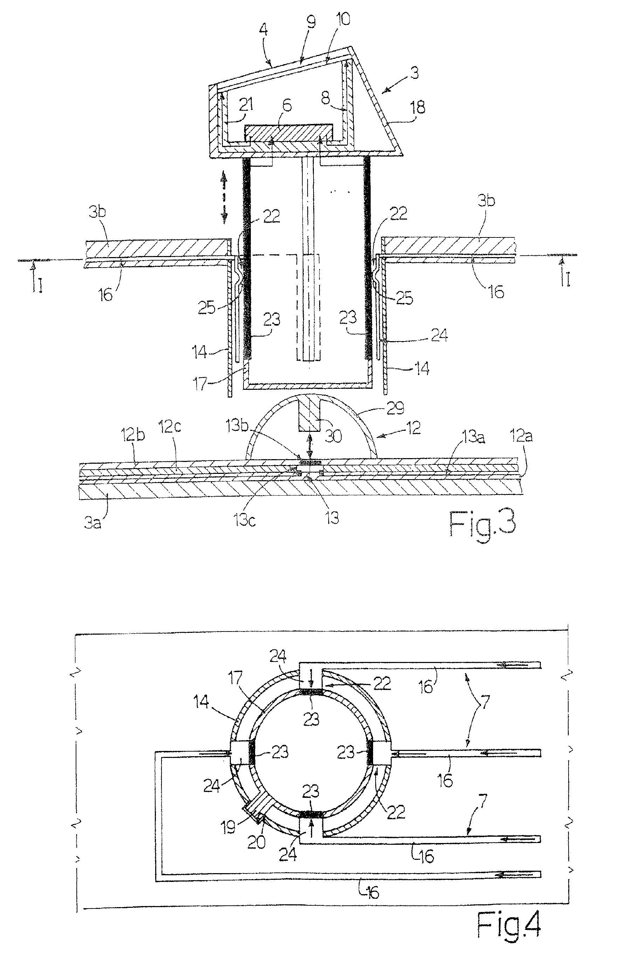

With reference to Figures 1 and 3, the keyboard 1 comprises a horizontal base 3a, on which there are distributed the switching devices 12, and a top lid or cover 3b set resting on top of the base 3a and designed to support the keys 3.

In particular, the lid 3b comprises a plurality of sleeves 14, which are appropriately distributed on the lid 3b itself and are each designed to receive within it a respective key 3, which is axially mobile within the sleeve 14 itself between a resting position, in which the key 3 is raised with respect to the base 3a, and a closing position, in which the key 3 is set with its own bottom end partially resting on the base 3a itself.

In the case in point, each sleeve 14 is integral with the lid 3b and is substantially shaped like a cylinder, which extends starting from the lid 3 towards the base 3a, with its own longitudinal axis set substantially vertical.

Integrated in the body of the lid 3b is a plurality of electrical paths 16, which together define the data-communication lines 7.

In particular, each electrical path 16 extends along the lid, starting from the central configuration unit 5 until it arrives at a given sleeve 14 housing the key 3, and has the function of transmitting to the local control unit 6 a given signal generated by the central configuration unit 5.

With reference to Figure 3, each key 3 comprises a first portion 17 connected, inside the sleeve 14, in such a way as to be able to move along the longitudinal axis of the sleeve 14, and a second portion 18 fixed to the top end of the first portion 17 and designed to house inside it the local control unit 6.

In particular, with reference to Figures 3 and 4, the first portion 17 is defined by a cylinder 17, on the head of which is fixed the second portion 18, which is shaped like a cap and has integrated, on its own top face, the graphic display 4.

It should be pointed out that the cylinder 17 is provided with an alignment tooth 19 (illustrated in Figure 4), which extends radially from the cylinder 17 itself, inside a longitudinal seat 20 made in the sleeve 14, and has the function of preventing, following upon coupling between the key 3 and the sleeve 14, any movement of rotation of the key 3 about its own longitudinal axis, at the same time enabling axial movement of the key 3 itself.

With reference to Figure 3, the second portion 18 houses, inside it, a supporting element 21, which is substantially shaped like a cup and is integrally fixed to the top end of the cylinder 17, with the corresponding opening facing upwards. Set resting on the said opening is the graphic display 4.

Set on top of the graphic display 4, there may preferably, but not necessarily, be a protection element, for example a small plate (not illustrated), which may be made of a transparent material, for protecting the graphic display 4.

The supporting element 21 is designed to house, inside it, the local control unit 6 and has the function both of supporting the graphic display 4 and of forming an electrical connection between the latter and the local control unit 6. For this purpose, the supporting element 21 is preferably, but not necessarily, made using a header made of insulating material, in the body of which there is integrated the connection circuit 8, defined by a plurality of electrical conductors designed to connect the outputs of the local control unit 6 appropriately to the inputs of the microcircuit 10.

With reference to Figures 3 and 4, the local control unit 6 set on the key 3 is connected to the data-communication line 7 through at least one sliding contact 22, which is designed to guarantee electrical connection between the local control unit 6 and the electrical paths 16 associated to the key 3 during axial movement of the latter.

In the case in point, the sliding contact 22 comprises a plurality of longitudinal conductive elements 23 (two of which are illustrated in Figure 3) fixed on the outer surface of the cylinder 17, and a plurality of brush elements 24 arranged inside the sleeve 14, each of which is connected to a respective electrical path 16 and positioned in contact with a respective conductive element 23.

In the example illustrated in Figures 3 and 4, the conductive elements 23 number four (for communicating a first data signal and a second data signal, a supply signal, and a ground signal) and extend in a vertical direction and parallel to one another, starting from the local control unit 6 to which they are connected at input, towards the bottom end of the key 3.

In particular, each conductive element 23, may be defined by a substantially rectangular lamina or plate fixed vertically on the outer surface of the cylinder 17 and made of electrically conductive material such as copper, or else from a layer of graphite designed to guarantee, advantageously, a high degree of sliding of the key 3 inside the sleeve 14.

As regards the brush elements 24, these are arranged inside the sleeve 14 at equal distances apart from one another, and respectively face, and are set in contact with, a corresponding conductive element 23.

In particular, the brush elements 24 are defined by a series of laminas or straps 24, which extend in a vertical direction and parallel to one another inside the sleeve 14 and underneath the lid 3b, and are shaped in such a way as to exert (when the key 3 is inserted in the sleeve 14) an elastic compression on the corresponding conductive elements 23, thus ensuring a constant electrical contact between the communication-data line 7 and the local control unit 6.

In the case in point, each strap 24 has a flexible projection 25, which is substantially C-shaped and is designed to bend between a resting position, in which the key 3 is extracted from the sleeve 14, and a deformed position, under the lateral thrust of the key 3.

As regards the switching devices 12, these comprise respectively a pair of electrical contacts 13, which are integrated on a first insulating sheet 12a set resting upon the base 3a in such a way as to be aligned with the respective key 3. In the case in point, the electrical contacts 13 are connected to the interface circuit 11 via a respective electrical path 13a integrated on the first sheet 12a.

The switching devices 12 further comprise an electrical contact 13b integrated on a second insulating sheet 12b and mobile away from and towards the electrical contacts 13 through an opening 13c made on a third insulating sheet 12c, set between the first insulating sheet 12a and the second insulating sheet 12b.

Each switching device 12 further comprises a bell element 29 made of flexible material such as rubber, which is fixed above the resting base 3a in a position substantially coaxial with the cylinder 17 and with the electrical contact 13b, and has an internal cylindrical portion 30 made of rubber, which can move away from or towards the electrical contact 13b under the thrust of the first portion 17 of the key 3, so as to provide for closing/opening of the electrical contacts 13.

It is evident that the interface circuit 11 is able to determine the pressure of any single key 3, i.e., the selection of any single symbol or image by the user via detection of the condition of closing/opening of the electrical contacts 13. The switching devices 12 are of a commonly known type and will hence not be described any further herein.

It should be pointed out that the keyboard 1 may comprise a display 31 (illustrated in Figures 1 and 2), which is controlled by the central configuration unit 5 and is designed to display to the user a list of the possible mappings that may be implemented on the keyboard and may be directly selected via at least one fast-selection key 32 (illustrated in Figures 1 and 2), the function of which is to enable the user to select a given mapping of the keys, which is listed for example by the display 31 via the keyboard 1.

It should be pointed out that the keys 32 dedicated to scrolling of the list appearing on the display 31 for selection of the new configuration of the keyboard 1 may be without the graphic display 4.

In this way, the user advantageously has the possibility of choosing, in an extremely fast way and without the aid of the computer 2 or of special programs, a given configuration, such as a mapping that comprises the symbols associated to any language of the world, that comprises the dedicated symbols for programming, or any other type of mapping.

It should moreover be pointed out that the different mappings of the keys of the keyboard 1, the alphanumeric symbols, or the images can be stored inside a non-volatile memory of a known type comprised within the central configuration unit 5, which can be updated directly by the computer 2, by means of the interface circuit 11, or else via a dedicated updating device (not illustrated), which can be connected to the central configuration unit 5 through a connector 33 set at the side on the keyboard 1.

The connector 33 may moreover enable connection, for example, of the central configuration unit 5 to the computer 2 in such a way as to carry out a fast data transmission between the latter and the keyboard 1, so enabling fast updating of the images appearing on the graphic displays 4.

Operation of the keyboard 1 described herein clearly follows from what has been explained previously and requires no further explanation.

The advantages of the keyboard 1 are evident. In the first place, the keyboard 1 is extremely versatile in that it can be reconfigured even without the aid of the computer 2. In addition, integration of the graphic displays 4 with OLED arrays on the keys 3, as well as enabling a high-resolution visualization of the symbols from wide angles of observation and in any condition of visibility, considerably reduces the electric power absorbed by the keyboard 1, thus rendering the latter interfaceable with any computer 2 that uses a standard communication protocol, thus eliminating the need for any adaptation or modification of a software or hardware type on the computer 2 itself.

It should moreover be pointed out that the extremely light weight of the graphic displays does not adversely affect the performance offered by the key in terms of typing speed, which proves comparable to the typing speed afforded by standard non-reconfigurable keyboards.

The extremely low cost of the graphic displays and the use of certain electronic components already present in ordinary standard keyboards enable the keyboard 1 to be particularly inexpensive.

Finally, from the above description, it should be pointed out that the keyboard 1 can advantageously be used as an extension of the traditional display screen. In fact, in the case of a computer of the notebook type, the keyboard 1 is adjacent to the traditional screen, and the graphic displays 4 integrated on the keys 3 are contiguous with respect to one another and form a practically uniform surface, which can be used as a display screen.

It is evident that, in this case, the computer 2 and the central configuration unit 5 are designed to co-operate to divide up the image displayed by the keyboard 1 into a plurality of portions of images, which are appropriately assigned to a respective graphic display 4.

Finally, it is clear that numerous modifications and variations may be made to the reconfigurable keyboard for computers described and illustrated herein, without departing from the scope of the present invention.

In particular, it should be pointed out that the electrical paths 16, instead of being integrated on the body of the lid 3b, may be integrated in a sheet of insulating material that can be fixed on the bottom surface of the lid 3b in a position such as to guarantee electrical contact between the electrical paths 16 themselves and the respective brush elements 24.

## Claims

1. A reconfigurable keyboard (1) for a computer (2) comprising a plurality of keys (3) for entering data, each one of which is provided with display means (4) comprising an array (9) of electrically activatable areas for displaying symbols and/or images indicating said data, and an activation microcircuit (10) electrically connected to said array (9) of electrically activatable areas for selectively activating each of said areas; said keyboard (1) comprising a local control unit (6), designed for selectively controlling, via said microcircuit (10), display of the symbols on said array (9), said reconfigurable keyboard (1) being **characterized in that** said array (9) comprises a plurality of organic light-emitting diodes (OLEDs) and **in that** said activation microcircuit (10) comprises a plurality of transistors electrically connected to said organic light-emitting diodes (OLEDs) for controlling activation/de-activation of the latter.

2. The keyboard according to Claim 1, **characterized in that** said microcircuit (10) comprises an array of TFT transistors electrically connected to said OLEDs for controlling activation/de-activation of said OLEDs.

3. The keyboard according to Claim 1 or Claim 2, **characterized in that** it comprises a central configuration unit (5), designed to communicate to each of said local control units (6) via a plurality of data-communication lines (7), the symbol and/or image assigned to the respective key (3).

4. The keyboard according to Claim 3, **characterized in that** each said local control unit (6) is integrated in a respective key (3); the connection between said local control unit (6) and said data-communication line (7) being made through a sliding electrical contact (22).

5. The keyboard according to Claim 4, **characterized in** it comprises a plurality of sleeves (14), which are fixed on a horizontal base (3b) of said keyboard (1) and which are each designed to receive within it a respective key (3); said sliding electrical contact (22) comprising a plurality of brush elements (24) arranged inside said sleeve (14).

6. The keyboard according to Claim 5, **characterized in that** said sliding electrical contact (22) comprises a plurality of electrically conductive elements (23) fixed on the key (3) and connected to said local control unit (6); each of said electrically conductive elements (23) being designed to slide on a respective brush element (24) during axial movement of the key (3), so as to maintain electrical contact between the local control unit (6) and the data-communication line (7).

7. The keyboard according to Claim 6, **characterized in that** each said key (3) comprises a first portion (17) set inside said sleeve (14) and a second portion (18) fixed on the top end of the first portion (17) and designed to support said display means (4); each said electrically conductive element (23) being fixed on the outer surface of said first portion (17) towards the respective brush element (24).

8. The keyboard according to Claim 7, **characterized in that** said conductive elements (23) extend parallel to one another and to the longitudinal axis of the key (3) throughout the length of said first portion (17), each facing a respective brush element (24).

9. The keyboard according to Claim 8, **characterized in that** each said brush element (24) comprises a strap made of conductive material, which extends along the sleeve (14) parallel to the respective electrically conductive element (23) and has a flexible projection designed to exert an elastic pressure on said electrically conductive element (23), so as to ensure electrical contact during axial movements of said key (3).

10. The keyboard according to any one of the Claims 7 to 9, **characterized in that** each key (3) comprises a supporting element (21) set inside said second portion (18) and designed to house said local control unit (6); and a plurality of signal-communication lines (8) integrated in said supporting element (21) and designed to connect said local control unit (6) to said microcircuit (10).

11. The keyboard according to any one of the preceding claims, **characterized in that** it comprises an interface circuit (11), which is designed to enable a bi-directional communication between said computer (2) and said keyboard (1).

12. The keyboard according to Claim 11, **characterized in that** it comprises a plurality of switching devices (12), each of which is associated to a respective key (3) and is designed to communicate to said interface circuit (11) an information signal indicating that said key (3) has been depressed.

13. The keyboard according to any one of Claims 2 to 12, **characterized in that** it comprises display means (31), which are controlled by the central configuration unit (5) and are designed to display a list of the possible mappings of the keyboard (1) that may be selected by the user.

14. The keyboard according to any one of the preceding claims, **characterized in that** it comprises connector means (33) designed to enable electrical connection between said central configuration unit (5) and at least one electrical device dedicated to updating of the data stored in said central configuration unit (5), said data defining the different possible configurations of the keyboard (1).

15. A reconfigurable keyboard (1) for a computer (2) comprising a plurality of keys (3), each of which is provided with display means (4) for displaying symbols or images, and is designed to enable communication to the computer (2) of a datum associated to the symbol or image displayed; a local control unit (6) integrated on the key (3) and designed to drive said display means (4) to display the symbol or image; a central configuration unit (5) designed to communicate through a data-communication line (7) to each said local control unit (6) the symbol or image assigned to the respective key (3); said keyboard (1) being **characterized in that** it comprises, for each key (3), a sliding electrical contact (22) designed to make the electrical connection between said local control unit (6) and said data-communication line (7).

16. The keyboard according to Claim 15, **characterized in that** it comprises a plurality of sleeves (14) fixed on a horizontal base (3b) of said keyboard (1), each of said sleeves being designed to receive inside it a respective key (3); the said sliding contact (22) comprising a plurality of brush elements (24) arranged inside said sleeve (14).

17. The keyboard according to Claim 16, **characterized in that** said sliding electrical contact (22) comprises a plurality of electrically conductive elements (23) fixed on the key (3) and connected to said local control unit (5); each said electrically conductive element (23) being designed to slide on a respective brush element (24) during axial movement of the key (3), so as to maintain electrical contact between the local control unit (6) and the data-communication line (7).

18. The keyboard according to Claim 17, **characterized in that** each said key (3) comprises a first portion (17) set inside said sleeve (14), and a second portion (18), fixed to the top end of said first portion (17) and designed to support said display means (4); each said electrically conductive element (23) being fixed on the outer surface of said first portion (17) towards the respective brush element (24).

19. The keyboard according to Claim 18, **characterized in that** said electrically conductive elements (23) extend parallel to one another and to the longitudinal axis of the key (3) throughout the length of said first portion (17) and facing each a respective brush element (24).

20. The keyboard according to Claim 19, **characterized in that** each brush element (24) comprises a strap made of conductive material, which extends along said sleeve (14) parallel to the respective electrically conductive element (23) and has a flexible projection (25) designed to exert an elastic pressure on said electrically conductive element (23), so as to guarantee electrical contact during axial movements of said key (3).

21. The keyboard according to any one of Claims 17 to 20, **characterized in that** each key (3) comprises a supporting element (21) set inside said second portion (18) and designed to house said local control unit (6); and a signal-communication line (8) integrated in said supporting element (21) and designed to connect said local control unit (6) to said display means (4).

22. The keyboard according to any one of the preceding claims, **characterized in that** it comprises an interface circuit (11), which is designed to enable a bi-directional communication between said computer (2) and said keyboard (1).

23. The keyboard according to Claim 22, **characterized in that** said interface circuit (11) is designed to effect a bi-directional communication with said central configuration unit (5).

24. The keyboard according to Claim 23, **characterized in that** it comprises a plurality of switching devices (12), each of which is associated to a respective key (3) and is designed to communicate to said interface circuit (11) an information signal indicating that said key (3) has been depressed.
